# EUROPEAN PATENT APPLICATION

(11) **EP 1 038 841 A2**
(43) Date of publication of application: **27.09.2000**
(21) Application number: 00112195.3
(22) Date of filing: 05.02.1997
(51) Int. Cl.: C03B 7/10, C03B 7/11, C03B 40/027

(54) **Glass gob shearing method and apparatus with contact lubricated blades**

(30) Priority: 06.02.1996 US 602873; 06.02.1996 US 602874
(62) Divisional of application: 97101793.4
(71) Applicant: OWENS-BROCKWAY GLASS CONTAINER INC., Toledo, Ohio 43666 (US)
(72) Inventor: Nickey, George A., Maumee, OH 43577 (US); Myers, Ronald T., Whitehouse, OH 43571 (US); Slifco, John M., Toledo, OH 43615 (US); Craig, Richard W., Toledo, OH 43602 (US); Flynn, Robin L., Toledo, OH 43614 (US)
(74) Representative: Blumbach, Kramer & Partner GbR

(57) **Abstract**

A shear method and apparatus (20) for shearing one or a plurality of streams of molten glass (A, B, C) into gobs. A contact lubricator (88) is provided to lubricate the contact surfaces of the blades.

## Description

### Field of the Invention

This invention relates to method and apparatus for shearing at least one stream of molten glass into individual gobs, according to the preambles of claims 1 and 5. More particularly, this invention relates to apparatus for sequentially shearing each of a multiplicity of streams of molten glass into individual gobs. In this apparatus, opposed sets of shearing blades are simultaneously moved toward and away from one another along opposed, rectilinear paths to overlap in shearing relationship approximately at the longitudinal central axes of the streams of molten glass that are being sheared.

### Background of the Invention

In the manufacture of glass containers by a forming machine of the I.S. ("individual section") type, one or more streams of molten glass flow downwardly from a feeder bowl of a glass melting furnace forehearth toward a section of the molding machine, and each stream is severed or sheared into a multiplicity of individual gobs by a shearing device positioned between the feeder bowl and the molding machine.

It is important to properly lubricate the shear blades of a glass feeder shearing mechanism as described above to avoid excessive friction when they rub against one another in their overlapping, shearing positions. Heretofore, such lubrication has typically been accomplished by spraying a mist of a suitable lubricant against the blades as they reciprocate during their shearing cycles; see US-A-2,754,627 which shows the features of the preambles to claims 1 and 5. However, this type of lubrication is difficult to control, and can be environmentally objectionable. It has also been proposed, in US-A-3,264,077, that a lubricant be applied to a surface of a blade from a passage therein through a porous member affixed to the blade. However, this complicates the fabrication of a shear blade and adds to the cost thereof, which is undesirable because such shear blades need to be periodically replaced due to the wear that such blades undergo in normal service.

### Summary of the Invention

The problem to be solved by the invention is to provide a shearing method and apparatus of the kind referred-to above which can be better controlled to dispense small amounts of lubricant. The invention is defined in claims 1 and 5. The shearing apparatus of the present invention utilizes a lubricant dispensing system to apply a carefully metered amount of lubricant by contact with one of the contact surfaces of the shear blades.

For a further understanding of the present invention, and the objects thereof, attention is directed to the drawing and the following description thereof, to the detailed description of the preferred embodiment of the invention, and to the appended claims.

### In the Drawing

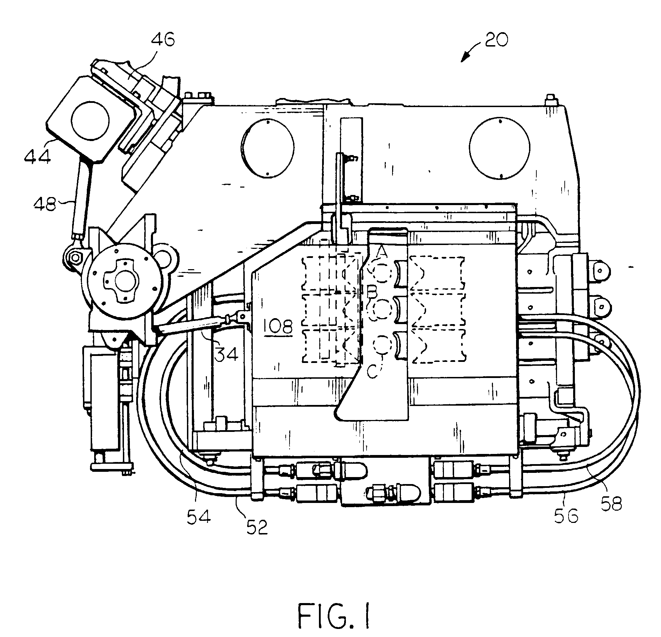

- Fig. 1: is a plan view of a glass gob parallel shearing apparatus according to a preferred embodiment of the present invention;

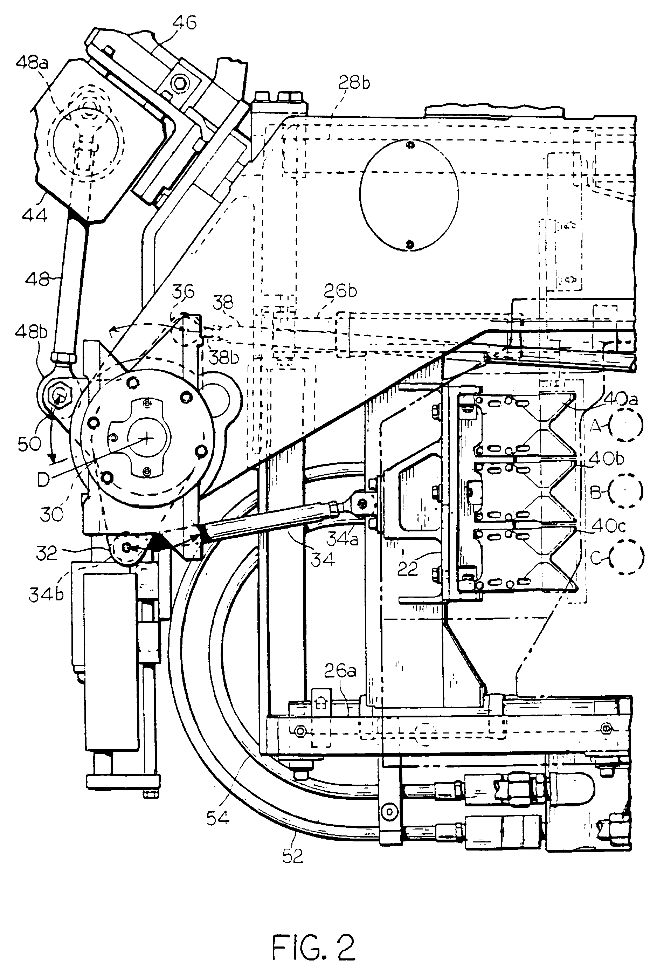

- Fig. 2: is a plan view, at an enlarged scale, of the left hand portion of the apparatus of Fig. 1;

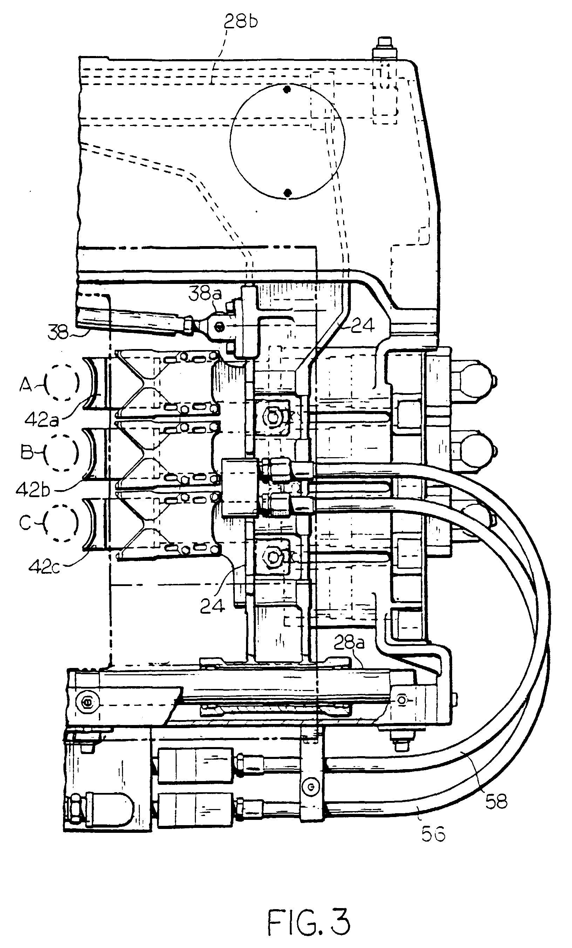

- Fig. 3: is a plan view, at an enlarged scale, of the right hand portion of the apparatus of Fig. 1;
- Fig. 4: is a front view, at an enlarged scale, of the apparatus of Fig. 1;

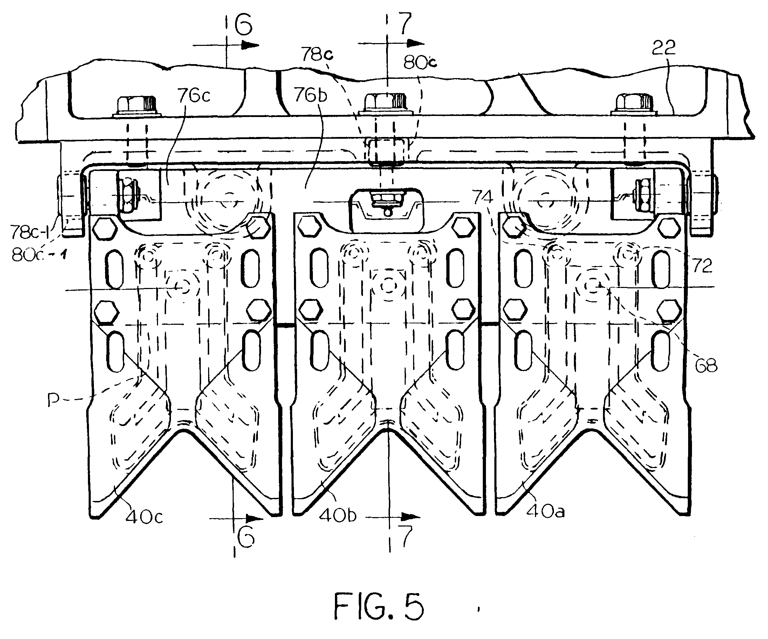

- Fig. 5: is a plan view, at an enlarged scale, of a portion of the apparatus of Figs. 1 and 2;
- Fig. 6: is a sectional view taken on line 6-6 of Fig 5;
- Fig. 7: is a sectional view taken on line 7-7 of Fig 5;
- Fig. 8: is a fragmentary, elevational view of a portion of the apparatus illustrated in Figs. 1 and 3;
- Fig. 9: is a view similar to Fig. 8 showing an alternative embodiment of the present invention; and
- Fig. 10: is a plan view of the apparatus illustrated in Fig. 9.

### Detailed Description of the Preferred Embodiment of the Invention

A parallel shear apparatus or device according to the preferred embodiment of the present invention is indicated generally be reference numeral 20 in the drawing and includes opposed shear blade carriages 22 and 24. The carriages 22 and 24 are mounted for reciprocating motion toward and away from one another, the carriage 22 being mounted on spaced apart, parallel tubular slides 26a and 26b and the carriage 24 being mounted on spaced apart, parallel tubular slides 28a and 28b. Preferably, the slides 26a and 26b are oriented to extend upwardly at a slight angle with respect to the orientation of the slides 28a and 28b, which preferably extend horizontally, to gradually bring the carriage 24 closer to the carriage 22 in a vertical direction as the horizontal distance therebetween is reduced.

The motion of each of the carriages 22 and 24 is rectilinear, and is simultaneously actuated by an oscillating bell crank 30. In that regard, the carriage 22 is connected to a throw 32 of the bell crank 30 by a connecting rod 34, an end 34a of which is pivotally attached to the carriage 22 and the other end 34b of which is pivotally attached to the throw 32 of the bell crank 30. Likewise, the carriage 24 is connected to a throw 36 of the bell crank 30 by a connecting rod 38, an end 38a of which is pivotally attached to the carriage 24 and the other end 38b of which it pivotally attached to the throw 36, the throws 32 and 34 being diametrically opposed to one another in their positions in relation to the bell crank 30.

The carriage 22 carries one or more horizontally extending shear blades, shown as three, horizontally a aligned shear blades 40a, 40b and 40c, one for each of the molten glass streams A, B and C flowing vertically from the glass feeder thereabove (not shown) with which the shear apparatus 20 is associated. Likewise, the carriage 24 carries a like number of horizontally extending shear blades, shown as the horizontally aligned shear blades 42a, 42b and 42c. The shear blades 40a, 40b, 40c, 42a, 42b and 42c may be, and preferably are, identical to one another. As the bell crank 30 is caused to oscillate, by means which will hereinafter be described more fully, the carriages 22 and 24 are caused to move along parallel paths toward and then away from one another, to periodically bring the opposed shear blades 40a and 42a, 40b and 42b, and 40c and 42d, respectively, into partly overlapping relationship with one another to thereby shear the streams of molten glass A, B and C into discrete gobs for further processing into individual glass containers by a glass forming machine of the individual section type (not shown), which is positioned below the shear apparatus 20. The motion imparted to the carriages 22, 24 by the bell crank 30 through the connecting rods 34 and 36 will be harmonic in its velocity and acceleration characteristics. This will minimize inertial loads on the carriages 22 and 24 and thereby minimize wear on them.

The bell crank 30 is caused to oscillate about its central axis D by a unidirectionally acting a.c. servo motor and gear reducer combination 44, which is mounted on a bracket 46 and may be of conventional construction. The rotational movement of the servo motor gear reducer combination 44 as transmitted to the bell crank 30 by a connecting rod 48, an end 48a of which is pivotally attached to the servo motor gear reducer combination 44 at a location away from its axis of rotation, and the other end 48b of which is pivotally attached to a throw SO of the bell crank 30 at a location between, and spaced from each of, the throws 32 and 36.

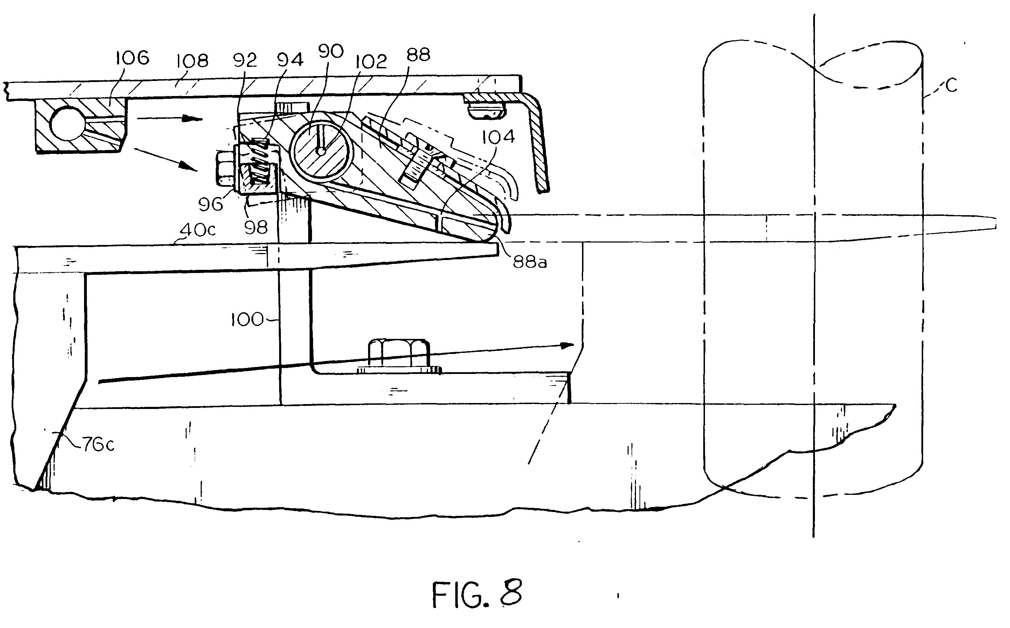

The blades 40a, 40b, 40c are internally liquid cooled, for example, by water, flexible inlet and outlet lines 52, 54, respectively, being provided to connect the carriage 22 to a source, not shown, of such cooling liquid. Likewise, the blades 42a, 42b, 42c are internally liquid cooled, flexible inlet and outlet lines 56, 58, respectively, being provided to connect the carriage 24 to a source, not shown, of such cooling liquid. As is shown in Fig. 6 for the blade 40c, cooling liquid flows from the inlet line 52 into an internal passage 60 in the carriage 22, and from the passage 60 into branch passage 60c which leads to the blade 40c.

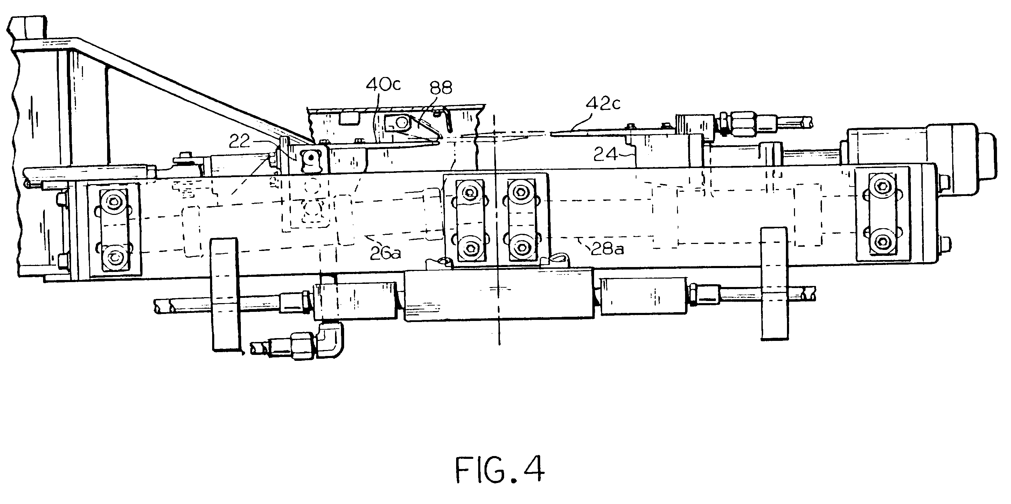

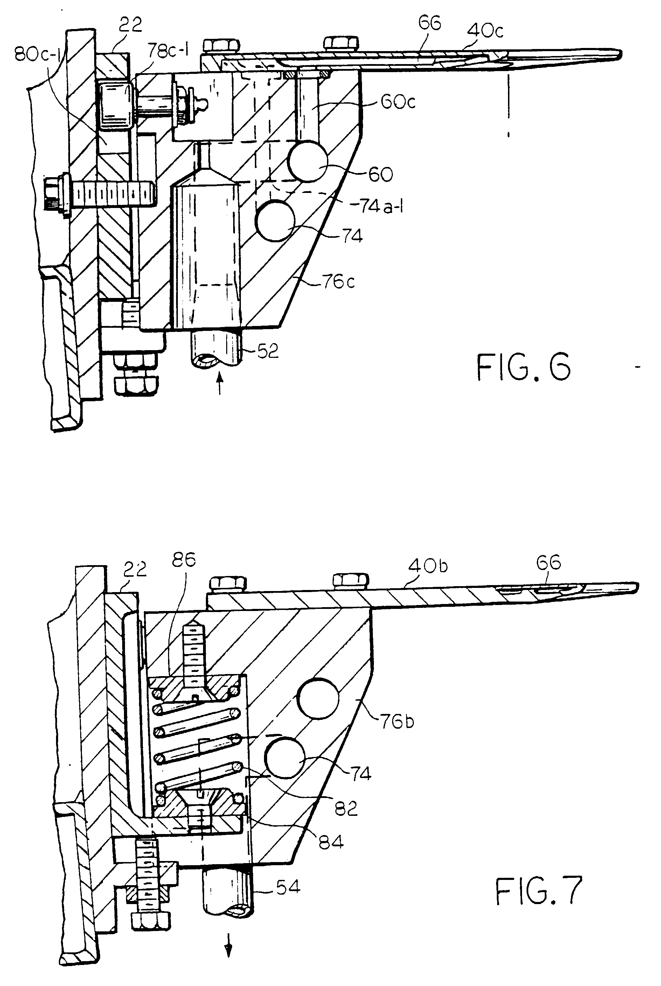

For proper shearing of the glass stream A, for example, the opposed shear blades 40a, 42a must contact each other when they overlap with one another at the innermost limits of their travel, in position to shear a gob of glass from the glass stream A, as indicated in phantom line in Fig. 4. The thickness of the blades 40a, 42a that is required to accommodate internal cooling, as heretofore described, precludes adequate deflection of the blades 40a, 42a when they engage one another in their overlapping positions, thus posing the risk of excessive contact loads on such blades. To avoid such risk, the blades carried by one of the carriages 22, 24, shown as the blades 40a, 40b carried by the carriage 22, are spring mounted with respect to such carriage, to permit the spring mounted blades to yield with respect to their opposed blades under contact loads that could otherwise be of an excessive magnitude.

Thus, as is shown, for example, in connection with the blades 40c, 40b in Figs. 6 and 7, respectively, each of the blades 40c, 40b is mounted on a block ortion 76c, 76b, respectively, of the carriage 22, each of the block portions 76c, 76b being reciprocable in a vertical plane with respect to other structure of the carriage 22. To that end, each of the block portions 76c, 76b is provided with a vertically spaced apart pair of guide rollers 78c-1, 78c-2, respectively, that are guided for reciprocation in a vertical plane by slots 80c-1, 80c-2, respectively, in the structure of the carriage 22. The block 76b, which carries the blade 40b, is biased toward its uppermost position by a compression spring 82 that is trapped between a horizontal surface 84 of the carriage 22 and a horizontal surface 86 of the block portion 76b, the uppermost limit of the travel of the block 76b. Similar spring biasing elements are provided to bias the blades 40a, 40c toward their uppermost positions being limited by the vertical extent of the slots SOc-1, 80c-2, which limits the upward travel of the guide rollers 78c-1, 78c-2.

Because of the upward orientation of the tubular lides 26a, 26b relative to the horizontal orientation of the slides 28a, 28b, the contact loads between the opposed blades 40b, 42b, for example, can be safely maintained at a low value when they first contact one another as they enter their shearing positions. Further travel, which would otherwise increase the contact loads quite rapidly, is safely accommodated by the compression of the compression springs, such as the spring 82, as heretofore described.

Figs. 4 and 8 illustrate a device for lubricating the contact surface of a blade of a set of blades, shown as the upper surface of the blade 40c, prior to its shearing contact with the contact surface of an opposed blade, namely the lower surface of the blade 42c. The upper surface of the blade 40c is contacted by a contact lubricator 88, which is pivotally mounted on a shaft 90. The lubricator 88 is biased downwardly against the upper surface of the blade 40c by a compression spring 92, which is trapped between a surface 94 of the lubricator 88 and a surface 96 of a member 98 that is affixed to a fixed frame member 100.

The shaft 90 receives lubricant, such as lubricating oil, through an internal passage 102, which communicates with a passage 104 in the lubricator 88. The lubricant then exits onto the upper surface of the blade 40c, and is smoothed into a smooth, thin film by a contact portion 88a as the blade 40c is moved forward by the carriage 22. Blades 40a, 40b are lubricated in a similar manner. Cooling of the lubricator 88 is provided by a compressed air distributor 106, which is attached to the underside of a fixed cover plate 108 that covers as much of the carriages 22, 24 as can be properly covered without interfering with the flow of the glass streams A, B, C through the parallel shear apparatus.

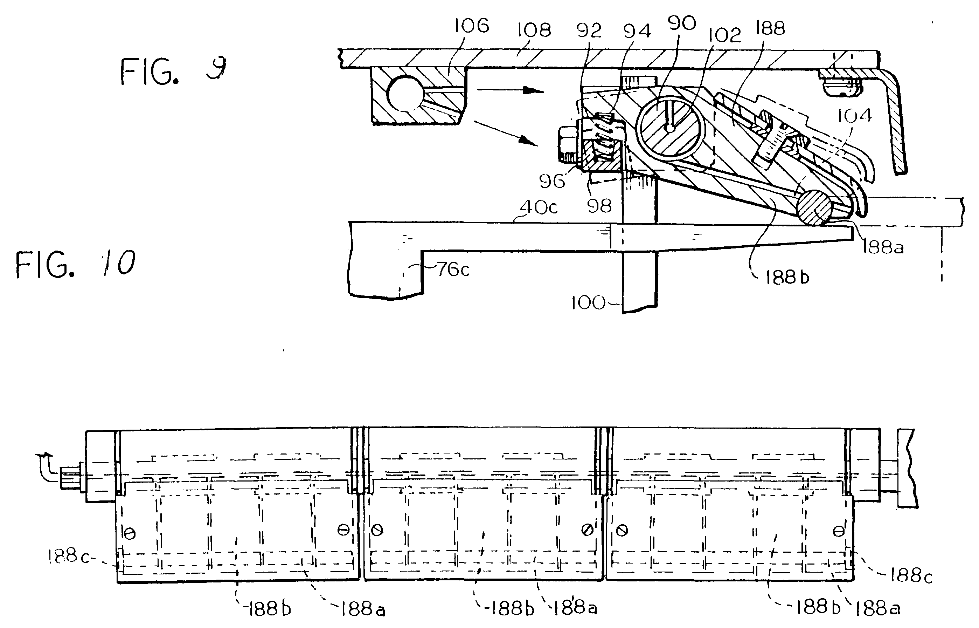

Figs. 9 and 10 illustrate a modified embodiment of the lubricator 88 which is illustrated in Fig. 8, the lubricator of Figs. 9 and 10 being identified by reference numeral 188. The contact portion of the lubricator is a roller 188a, which is rotatingly carried by a non-rotatable member 188b of the lubricator. Thus, the application of lubricant to the upper surface of the blade 40c by the lubricator 188 is by rolling contact, whereas the application of lubricant to the upper surface of the blade 40c by the lubricator 88 of the embodiment of Fig. 8 is by sliding contact. The rollers 188a are axially positioned relative to the non-rotatable members 188b by fixed stop members 188c at the outermost ends of the outermost non-rotatable members. The use of a brush, either rotatingly or non-rotatingly carried by the non-rotatable member 188b is also contemplated.

## Claims

1. A method of shearing at least one vertically flowing stream of molten glass into individual gobs, comprising the steps of:
providing first and second opposed, generally horizontally extending shear blades (40a, 42a), each of which has a shearing end and a distant end;
simultaneously moving the first and second shear blades (40a, 42a) along first and second paths of travel toward and then away from one another to bring the shearing ends of each of the first and second shear blades (40a, 42a) into partly overlapping contact with one another in alignment with the stream of molten glass when the first and second shear blades are at a first innermost position, and
applying a lubricant to the upper or lower blade surface of one of said first blade (40a) and said second blade (42a), said blade surface being a surface that contacts the other of said first blade and said second blade when said first blade and said second blade partly overlap one another,
characterized in that
the lubricant is applied by contact with said blade surface to evenly spread the lubricant thereon into a thin, relatively uniform coating.

2. The method according to claim 1
wherein the step of applying the lubricant is performed by rollingly contacting said blade surface of said one of said first blade and second blade.

3. The method of claim 1 or 2
wherein a first (40a, 40b, 40c) and a second (42a, 42b, 42c) plurality of opposed, generally horizontally extending shear blades are used for being simultaneously moved along said first and second paths of travel between said first and second positions, and
lubricant is applied to one upper or lower blade surface of each of the blades in one of the first and second pluralities of blades.

4. The method according to claim 3 and further comprising the steps of:
resiliently biasing one of the first and second pluralities of shear blades toward the other of the first and second pluralities of shear blades to reduce contact loads between the first and second pluralities of shear blades when they engage one another.

5. A shear apparatus for shearing at least one vertically flowingstream of molten glass into individual gobs, the apparatus comprising:
a first blade (40a) extending generally horizontally;
a second blade (42a) extending generally horizontally; the blades (40a, 40b) each having an upper and lower surface as well as a shearing end and a distant end;
means (22, 24, 26a, 26b, 28a, 28b) for supporting and moving said first blade (40a) along first and second paths of travel between a first position in which said first blade (40a) and said second blade (42a) are spaced apart from one another, and a second position in which said upper and lower blade surfaces of the shearing end partly overlap and contact one another to shear a stream of molten glass flowing between first and second blades (40a, 42a); and
lubrication application means (88, 188) for applying a lubricant to one of said upper and lower blade surfaces;
characterized in that
said lubrication application means (88, 188) comprises a contact portion (88a, 188a) that contacts said upper or lower blade surface so as to evenly spread the lubricant onto said blade surface when in said first position and to produce a relatively uniform, thin covering on said blade surface.

6. The apparatus according to claim 5
wherein said contact portion comprises a roller (188a), and means (188b) for rotatingly supporting said roller for rolling contact with one of said upper or lower blade surfaces.

7. The apparatus according to claim 1 or 2
wherein said lubricant application means (88, 188) further comprises:
biasing means (92) for yieldably biasing said contact portion (88a, 188a) against one of said upper or lower blade surfaces..

8. The apparatus according to any of claims 5 to 7
wherein the lubrication application means (88, 188) comprises a member which is pivotally mounted on a shaft (90), the shaft and the member having internal passages (102, 104) which communicate and feed the lubricant to the contact portion (88a, 188a)

9. The apparatus according to any of claims 5 to 8
wherein said means (22, 24, 26a, 26b, 28a, 28b) for supporting and moving said blades (40a, 42a) comprises
a first carriage (22) for said first blade (40a),
a second carriage (24) for carrying said second blade (42a)
means (26a, 26b) for slidably supporting the first carriage (22),
means (28a, 28b) for slidably supporting the second carriage (24), and
drive means (30) for moving said carriages (22, 24) along said supporting means (26a, 26b, 28a, 28b) between said first and second positions of the blades (40a, 42a).

10. The apparatus according to any of claims 5 to 9
wherein said first blade (40a) belongs to a plurality of first blades and
wherein said second blade (42a) belongs to a plurality of second blades.

11. The apparatus according to claim 9
wherein said drive means (30) drives said first carriage (22) and said second carriage (24) toward and away from one another along first and second rectilinear travel paths.
